# EUROPEAN PATENT APPLICATION

(11) **EP 4 787 605 A1**
(43) Date of publication of application: **05.08.2026**
(21) Application number: 24870889.3
(22) Date of filing: 26.09.2024
(51) Int. Cl.: H01M 50/533, H01M 50/119, H01M 50/186, H01M 50/184

(54) **BATTERY AND ELECTRICAL DEVICE**

(30) Priority: 26.09.2023 CN 202322624903 U
(71) Applicant: BYD Company Limited, Shenzhen, Guangdong 518118 (CN)
(72) Inventor: ZHANG, Zhongfeng, Shenzhen, Guangdong 518118 (CN); WANG, Qing, Shenzhen, Guangdong 518118 (CN); WANG, Jianjun, Shenzhen, Guangdong 518118 (CN)
(74) Representative: Taor, Simon Edward William
(86) International application number: PCT/CN2024/121484
(87) International publication number: WO 2025/067349

(57) **Abstract**

An electrical device, provided with a battery (100). The battery (100) comprises a metal housing (1), a battery cell (2), an electrically conductive column (3) and an abutting member (4), the battery cell (2) being accommodated in the metal housing (1), the battery cell (2) comprising a battery cell body (21), a first tab (22) and a second tab (23), a first end of the electrically conductive column (3) being conductively connected to the first tab (22), a second end of the electrically conductive column (3) being located outside the metal housing (1), the second tab (23) having a tab protrusion (231) protruding from the battery cell body (21), and the abutting member (4) being accommodated in the metal housing (1) and used to press the tab protrusion (231) against an inner surface of the metal housing (1), such that the tab protrusion (231) is in conductive contact with the metal housing (1).

## Description

### CROSS-REFERENCE TO RELATED APPLICATIONS

The present disclosure claims priority to Chinese Patent Application No. 202322624903.4 entitled "BATTERY AND ELECTRICAL DEVICE" filed on September 26, 2023 for Chinese Patent Office, which is incorporated herein by reference in its entirety.

### FIELD

The present disclosure relates to the field of battery technology, in particular, to a battery and an electrical device.

### BACKGROUND

In the related art, the battery generally comprises a housing and a battery cell housed within the housing, and both the positive electrically conductive column and the negative electrically conductive column extend into the housing and connect with the positive tab and the negative tabs of the battery cell, respectively, thereby leading out the positive electrode and negative electrode of the battery cell. Since two electrically conductive columns are required to serve as the positive electrode and the negative electrode respectively, and the two electrically conductive columns need to be connected to the positive electrode and the negative electrodes respectively, the processing difficulty and manufacturing cost of the battery are increased.

### SUMMARY

An object of the present disclosure is to provide a battery and an electrical device to solve the problems in the related art described above.

In order to achieve the above object, as a first aspect of the present disclosure, the present disclosure provides a battery, including a metal housing, a battery cell, a electrically conductive column, and a abutting member; the battery cell is accommodated in the metal housing, wherein the battery cell includes a battery cell body, a first tab, and a second tab, a first end of the electrically conductive column is conductively connected to the first tab, and a second end of the electrically conductive column is located outside of the metal housing. The second tab has a tab protrusion protruding from the battery cell body, and the abutting member is accommodated in the metal housing and used to press the tab protrusion against an inner surface of the metal housing such that the tab protrusion is in conductive contact with the metal housing.

According to some examples of the present disclosure, the abutting member is resilient, the metal housing has a recess formed thereon which is recessed toward interior of metal housing, and at least part of the tab protrusion is clamped between the abutting member and the recess.

According to some examples of the present disclosure, the recess is formed as annular recess extending along circumference of the metal housing.

According to some examples of the present disclosure, the dimension of the recess in axial direction of the metal housing is equal to or smaller than the dimension of the abutting member in axial direction of the metal housing.

According to some examples of the present disclosure, the recess has a dimension of 1.6 mm to 2 mm in axial direction of the metal housing and the abutting member has a dimension of 3.9 mm to 4.1 mm in axial direction of the metal housing.

According to some examples of the present disclosure, the dimension of the recess along the direction perpendicular to axial direction of the metal housing is 0.4 mm to 0.7 mm.

According to some examples of the present disclosure, the abutting member and the electrically conductive column are on same side of the battery cell body, a first end of the electrically conductive column penetrates through the abutting member and is electrically conductive connected to the first tab, and the electrically conductive column and the abutting member are insulated from each other.

According to some examples of the present disclosure, the abutting member is a sealing block, outer peripheral surface of the sealing block is in sealing contact with inner peripheral surface of the metal housing, and the tab protrusion is clamped between the sealing block and the metal housing.

According to some examples of the present disclosure, the metal housing comprises a housing body and a flange formed at one end of the housing body, and the sealing block is clamped between the flange and the battery cell body.

According to some examples of the present disclosure, the tab protrusion is 2.3 mm to 3.3 mm in length.

By the above technical solution, the abutting member may press the tab protrusion of the second tab against the inner surface of the metal housing, the tab protrusion is thereby conductively connected to the metal housing, which enables the metal housing to be connected to a electrical appliance instead of the electrically conductive column connected to the second tab in the related art, thereby reducing the number of electrically conductive columns, simplifying the structure of the battery, reducing the processing cost and difficulty of the battery, and improving the processing efficiency.

Additional features and advantages of the present disclosure will be described in detail in the Detailed Description section that follows.

### BRIEF DESCRIPTION OF THE DRAWINGS

The accompanying drawings are used to provide a further understanding of the disclosure and constitute a part of the specification and, together with the detailed description below, serve to explain the disclosure, but do not constitute a limitation thereof.
FIG. 1 is a schematic top view of a battery provided by an embodiment of the present disclosure.
FIG. 2 is schematic cross-sectional view taken along direction A-A in FIG. 1.
FIG. 3 is an enlarged schematic view of part A in FIG. 2.
FIG. 4 is a schematic perspective view of a battery according to an embodiment of the present disclosure.

### DETAILED DESCRIPTION

The embodiments of the present disclosure are described in detail below with reference to the accompanying drawings. It is to be understood that the embodiments described herein are provided to illustrate and explain the present disclosure only and are not intended to limit the present disclosure.

In the present disclosure, unless otherwise stated, directional words used such as "upper" and "lower" generally refer to the upper and lower of the adapter structure when it is assembled in the battery pack in normal use, and "inner" and "outer" refer to the inner and outer relative to the contours of the corresponding components. In addition, the terms "first" and "second" used in the present disclosure are intended to distinguish one element from another and do not have sequence and importance.

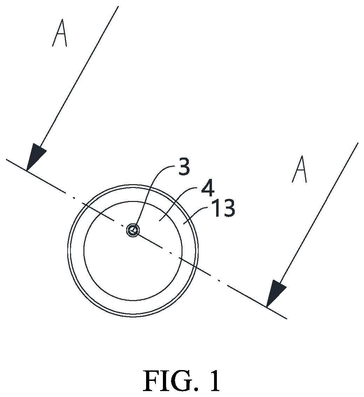

A first aspect provided as the present disclosure, as shown in FIG. 1 to FIG. 4, the present disclosure provides a battery 100, including a metal housing 1, a battery cell 2, an electrically conductive column 3 and an abutting member 4. The battery cell 2 is accommodated in the metal housing 1, and the battery cell 2 includes a battery cell body 21, a first tab 22 and a second tab 23. A first end of the electrically conductive column 3 is conductively connected to the first tab 22, and a second end of the electrically conductive column 3 is located outside of the metal housing 1. The second tab 23 has a tab protrusion 231 protruding from the battery cell body 21. The abutting member 4 is received within the metal housing 1 and used to press the tab protrusion 231 against an inner surface of the metal housing 1, so that the tab protrusion 231 is in conductive contact with the metal housing 1.

By the above technical solution, the tab protrusion 231 of the second tab 23 can be abutted against the inner surface of the metal housing 1 by the abutting member 4, thereby the tab protrusion 231 is conductively connected to the metal housing 1, enabling the metal housing 1 to be connected to an electrical appliance instead of the electrically conductive column connected to the second tab in the related art, thereby reducing the number of electrically conductive columns, simplifying the structure of the battery 100, reducing the processing cost and difficulty of the battery 100, and improving the processing efficiency.

It should be noted that the first tab 22 may be the positive tab of the battery cell 2 and the second tab 23 may be the negative tab of the battery cell 2, so that the electrically conductive column 3 is the positive electrode of the battery 100 and the metal case 1 is the negative electrode of the battery 100; the first tab 22 may also be a negative tab of the battery cell 2 and the second tab 23 may be a positive tab of the battery cell 2, so that the electrically conductive column 3 is the negative electrode of the battery 100 and the metal case 1 is the positive electrode of the battery 100, without limitation thereto.

In addition, optionally, at least part of the first tab 22 may protrude from battery cell body 21 to facilitate electrical connection with electrically conductive column 3.

Optionally, the tab protrusion 231 may have a length of 2.3 mm to 3.3 mm. By adopting the tab protrusion 231 with the above length, it is possible to ensure that the tab protrusion 231 can be clamped between the abutting member 4 and the metal housing 1, while being able to shorten the length of the tab protrusion 231 as much as possible, which can save material and cost of the second tab 23 and ensuring that the tab protrusion 231 has a sufficient length for being clamped by the abutting member 4 and the metal housing 1.

It should be noted that length of the tab protrusion 231 refers to length of the tab protrusion 231 itself, that is, the length of the tab protrusion 231 refers to straight-line distance from one end of the tab protrusion 231 close to the battery cell body 21 to the other end away from the battery cell body 21 in an unbent state.

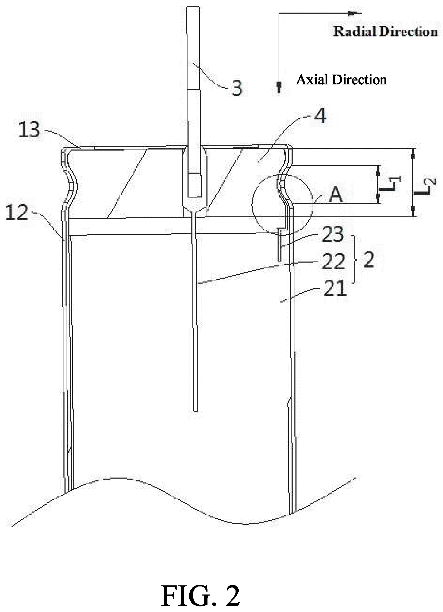

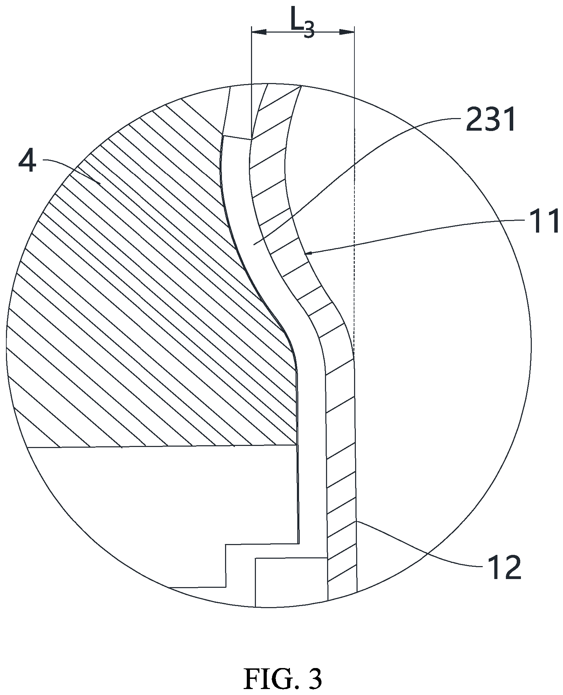

It is understood that the abutting member 4 may have any suitable shape and structure, in one embodiment provided by the present disclosure, as shown in FIG. 2 and FIG. 3, the abutting member 4 may have elasticity, a recess 11 is formed on the metal housing 1 which is recessed towards the interior of the metal housing 1, at least part of the tab protrusion 231 is clamped between the abutting member 4 and the recess 11. Since the tab protrusion 231 needs to remain in contact with the metal housing 1 in order to conduct electricity with the metal housing 1, the abutting member 4 is elastic, so that the tab protrusion 231 can be subjected to the elastic force of the abutting member 4 to maintain tight fit state with the metal housing 1, preventing the tab protrusion 231 from separating from the metal housing 1 and causing the battery 100 to fail. In addition, the recess 11 recessed inward is formed on the metal housing 1, further reducing the space between the metal housing 1 and the abutting member 4, and part of the tab protrusion 231 is clamped between the abutting member 4 and the recess 11, so that the tab protrusion 231 is more closely fitted to the metal housing 1, further reducing the likelihood of falling off and failure.

In the production process of the battery 100, the abutting member 4 may first be placed inside the metal housing 1, and then a recess 11 can be formed on the metal housing 1.During the process of the recess 11 being recessed toward the interior of the metal housing 1, the recess 11 squeezes the abutting member 4, causing the abutting member 4 elastically deform and generate an elastic force pressing the tab protrusion 231 against the recess 11 tightly. Thus, through the above embodiment it is also possible to guarantee the clamping of the tab protrusion 231 between the abutting member 4 and the metal housing 1 while reducing requirements on the manufacturing accuracy of the abutting member 4 and the metal housing 1.

Optionally, the abutting member 4 may be a ring-like structure, a block-like structure, a plate-like structure, etc. with elasticity, which is not limited thereto in the present disclosure.

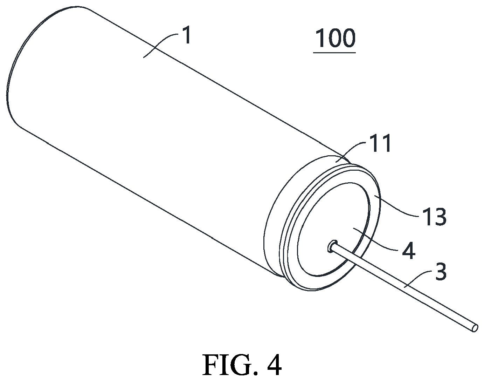

Optionally, as shown in FIG. 2 and FIG. 4, the recess 11 may be formed as an annular recess extending along the circumference of the metal housing 1. On the one hand, since the recess 11 extends along the circumferential direction of the metal housing 1 and is formed as a ring, no matter where the tab protrusion 231 is located in the metal housing 1, the annular recess can all be close to the tab protrusion 231, so that the abutting member 4 can press the tab protrusion 231 against the annular recess tightly. On the other hand, since the battery cell 2 is accommodated in the metal housing 1, the annular recess may form a stop on the inner surface of the metal housing 1, thereby limiting the range of movement of the battery cell body 21 and preventing the battery cell body 21 from moving in the metal housing 1.

Optionally, the annular recess may be formed by rolling with a roller groove jig.

Optionally, as shown in FIG. 2, the dimension L1 of the recess 11 along the axial direction of the metal housing 1 may be equal to or smaller than the dimension L2 of the abutting member 4 along the axial direction of the metal housing 1. Since the tab protrusion 231 is clamped between the abutting member 4 and the recess 11, setting the axial dimension L1 of the recess 11 along the metal housing 1 equal to or smaller than the axial dimension L2 of the abutting member 4 along the metal housing 1, the tab protrusion 231 can always be kept clamping between the abutting member 4 and the recess 11. Even if the length of the tab protrusion 231 is greater than the axial dimension L1 of the recess 11 along the metal housing 1, it can be clamped between the abutting member 4 and the metal housing 1, thereby ensuring that the tab protrusion 231 always fit with the metal housing 1, improving the reliability of the battery 100.

It should be noted that the dimension L1 of the recess 11 along the axial direction of the metal housing 1 may refer to the largest dimension of the recess 11 along the axial direction of the metal housing 1. For example, for embodiments in which the cross-section of the recess 11 is formed as arc-shape or V-shape, the dimension L1 of the recess 11 along axial direction of the metal housing 1 refers to the straight-line distance between the two ends of the opening of the arc-shape or V-shape along the axial direction of the metal housing 1. The dimension L2 of the abutting member 4 along the axial direction of the metal housing 1 refers to the straight-line distance between the two ends of the abutting member 4 along the axial direction of the metal housing 1, that is, the thickness of the abutting member 4 along the axial direction of the metal housing 1.

Optionally, the dimension L1 of the recess 11 in the axial direction of the metal housing 1 may be 1.6 mm to 2 mm and the dimension L1 of the abutting member 4 in the axial direction of the metal housing 1 is 3.9 mm to 4.1 mm. Thus, it can not only promote the abutting member 4 to generate a elastic force pushing the tab protrusion 231 toward the direction close to the metal housing 1, making the tab protrusion 231 press against the metal housing 1, but also avoid an excessive influence on the structural strength of the metal housing 1.

Optionally, as shown in FIG. 3, the dimension L3 of the recess 11 along the direction perpendicular to the axial direction of the metal housing 1 is 0.4 mm to 0.7 mm. Since the recess 11 is recessed into the metal housing 1 to clamp the tab protrusion 231 between the recess 11 and the abutting member 4, the dimension L3 of the recess 11 along the direction perpendicular to the axial direction of the metal housing 1 is the depth of the recess 11 recessed toward the interior of the metal housing 1. When the depth is 0.4 mm to 0.7 mm, it can be ensured that the recess 11 and the abutting member 11 clamp the tab protrusion 231, at the same time it can also prevent the abutting member 4 from being deformed excessively and failing due to excessive depth, further increasing the reliability of the battery 100. For the embodiments mentioned below in which the abutting member 4 is a sealing block, the recess 11 has a dimension of 0.4 mm to 0.7 mm along the direction perpendicular to the axial direction of the metal housing 1, on the one hand, it is possible to guarantee the sealing effect of the sealing block on the battery cell 2 and, on the other hand, it is also possible to avoid bulging of the sealing block due to the squeezing of the recess 11.

It should be noted that the dimension L3 of the recess 11 along the direction perpendicular to the axial direction of the metal housing 1 may refer to the maximum dimension of the recess 11 along the direction perpendicular to the axial direction of the metal housing 1. For example, for the embodiment in which the cross-section of the recess 11 is arc-shaped, the dimension L3 of the recess 11 along the direction perpendicular to the axial direction of the metal housing 1 refers to the maximum straight-line distance of the arc-shape from opening to its depression. For embodiment in which the cross-section of the recess 11 is V-shaped, the dimension L3 of the recess 11 along the direction perpendicular to the axial direction of the metal housing 1 refers to the straight-line distance between the opening of the V-shape and the tip of the V-shape. It will be understood that for the embodiment in which the recess 11 is U-shaped, the dimension L3 of the recess 11 along the direction perpendicular to the axial direction of the metal housing 1 refers to the straight-line distance between the opening of the U-shape and the bottom opposite to the opening of the U-shape.

The abutting member 4 and the electrically conductive column 3 may be located on the same side of the battery cell body 21 or on different sides of the battery cell body 21 (e.g., the electrically conductive column 3 is located on the top of the battery cell body 21 and the abutting member 4 is located on the bottom of the battery cell body 21), which is not limited thereto in the present disclosure.

As shown in FIG. 2, in one embodiment provided by the present disclosure, the abutting member 4 and the electrically conductive column 3 are located on the same side of the battery cell body 21. A first end of the electrically conductive column 3 penetrates the abutting member 4 and is conductively connected to the first tab 22, and the electrically conductive column 3 and the abutting member 4 are insulated from each other. Since the tab protrusion 231 is pressed against the inner surface of the metal housing 1 by the abutting member 4 and is in conductive contact with the metal housing 1, the metal housing 1 and the electrically conductive column 3 respectively constitute two electrodes of the battery 100, and in order to prevent short-circuiting of the battery 100 due to contact between the two electrodes, the electrically conductive column 3 and the abutting member 4 are insulated from each other, which can ensure that no conductive contact occurs between the electrically conductive column 3 and the metal housing 1, further ensuring safety of the battery 100.

Optionally, the present disclosure does not limit the way of insulation between the electrically conductive column 3 and the abutting member 4. For example, an insulating coating may be applied on the surface of the abutting member 4, the abutting member 4 may be made of an insulating material (e.g., rubber, plastic, etc.), or insulating piece may be added between the electrically conductive column 3 and the abutting member 4, which is not limited thereto in the present disclosure.

Optionally, as shown in FIG. 2, the abutting member 4 may be a sealing block, an outer circumferential face of the sealing block is in sealing contact with an inner circumferential face of the metal housing 1, and the tab protrusion 231 is clamped between the sealing block and the metal housing 1. Since the sealing block generally has elasticity and insulation, the abutting member 4 is set as a sealing block and is in sealing contact with the inner peripheral surface of the metal housing 1, so that the abutting member 4 can have at least the following three effects at the same time: first, sealing the battery cell 2 within the metal housing 1, preventing damage to the battery cell 2 due to a poor sealing of the battery 100; second, deforming under the action of the recess 11 and generating an elastic force to press the tab protrusion 231 against the recess 11; third, for embodiments in which the electrically conductive column 3 passes through the seal block, it can avoid the electrically conductive column 3 and the metal housing 1 from being electrically conductive to each other and causing a short circuit in the battery 100.

As mentioned above, when the abutting member 4 is a sealing block, the dimension of the recess 11 along the direction perpendicular to the axial direction of the metal housing 1 may be 0.4 mm to 0.7 mm, thereby ensuring the sealing effect of the sealing block against the battery cell 2, avoiding a gap between the sealing block and the inner surface of the metal housing 1, and also preventing the sealing block from being squeezed and causing it to warp or bulge due to the excessive inward dimension of the recess 11.

Optionally, a through hole may also be formed on the sealing block through which the electrically conductive column 3 passes; or the sealing block is formed as an annular sealing block to enable the electrically conductive column 3 to pass through the hollow portion in the middle of the annular sealing block.

Optionally, the sealing block may be a rubber sealing block.

Optionally, as shown in FIG. 1 and FIG. 2, the metal housing 1 may include a housing body 12 and a flange 13 formed at one end of the housing body 12, and the sealing block is clamped between the flange 13 and the battery cell body 21. It can be understood that an opening is formed at one end of the metal housing 1, the battery cell 2 and the sealing block can be loaded into the metal housing 1 from the opening. After the battery cell 2 and the sealing block are loaded, by bending the opening and forming the flange 13, the aperture of the opening can be reduced and the sealing block clamped between the flange 13 and the battery cell body 21, so that the sealing block and the battery cell 2 can be fixed along the axial direction of the metal housing 1, and the battery cell body 21 is sealed and fixed in the metal housing 1 together with the sealing block.

Optionally, the battery 100 may be a capacitor battery or other types of cylindrical batteries, and which is not limited thereto in the present disclosure.

As a second aspect provided by the present disclosure, the present disclosure also provides a electrical device including the battery 100 described above.

The present disclosure does not limit the type of electrical device, and it may be, for example, a vehicle, a mobile phone, a portable device, a laptop, an electric toy, an electric tool, an unmanned aerial vehicle, a lighting device, etc. The vehicle may be a fuel vehicle, an pure electric vehicle, a hybrid vehicle, an extended-range vehicle, etc.

Preferred embodiments of the present disclosure have been described above in detail with reference to the accompanying drawings, but the present disclosure is not limited to specific details in the above-described embodiments, and within the technical concept of the present disclosure, a variety of simple modifications can be made to the technical solutions of the present disclosure, all of which are within the scope of protection of the present disclosure.

It should be additionally noted that various specific technical features described in the above specific embodiments can be combined in any suitable manner without contradiction, and the present disclosure will not separately describe various possible combinations in order to avoid unnecessary repetition.

In addition, various different embodiments of the present disclosure can also be arbitrarily combined, as long as they do not violate the concept of the present disclosure, they should also be regarded as the contents disclosed by the present disclosure.

## Claims

1. A battery (100) comprising:
a metal housing (1);
a battery cell (2), being accommodated in the metal housing (1), and the battery cell (2) comprising a battery cell body (21), a first tab (22) and a second tab (23);
an electrically conductive column (3) , a first end of the electrically conductive column (3) being conductively connected to the first tab (22), a second end of the electrically conductive column (3) being located outside of the metal housing (1), and the second tab (23) having a tab protrusion (231) protruding from the battery cell body (21); and
an abutting member (4), being accommodated in the metal housing (1) and used to press the tab protrusion (231) against an inner surface of the metal housing (1) to bring the tab protrusion (231) into conductive contact with the metal housing (1).

2. The battery (100) according to claim 1, wherein that the abutting member (4) having elasticity, the metal housing (1) being formed with a recess (11) recessed towards interior of metal housing (1), and at least part of the tab protrusion (231) being clamped between the abutting member (4) and the recess (11).

3. The battery (100) according to claim 2, wherein that the recess (11) being formed as an annular recess extending along circumference of the metal housing (1).

4. The battery (100) according to claim 3, wherein that a dimension of the recess (11) along axial direction of the metal housing (1) being equal to or smaller than a dimension of the abutting member (4) along axial direction of metal housing (1).

5. The battery (100) according to claim 4, wherein that the recess (11) having a dimension of 1.6 mm to 2 mm along axial direction of the metal housing (1) and the abutting member (4) having a dimension of 3.9 mm to 4.1 mm along axial direction of the metal housing (1).

6. The battery (100) according to claim 4 or 5, wherein that the recess (11) having a dimension of 0.4 mm to 0.7 mm along direction perpendicular to axial direction of the metal housing (1).

7. The battery (100) according to any one of claims 1 to 6, wherein that the abutting member (4) and the electrically conductive column (3) being located on same side of the battery cell body (21), the first end of the electrically conductive column (3) penetrating through the abutting member (4) and being electrically conductive connected to the first tab (22), and the electrically conductive column (3) and the abutting member (4) being insulated from each other.

8. The battery (100) according to any one of claims 1 to 7, wherein that the abutting member (4) being a sealing block, outer peripheral surface of the sealing block being in sealing contact with inner peripheral surface of the metal housing (1), and the tab protrusion (231) being clamped between the sealing block and the metal housing (1).

9. The battery (100) according to claim 8, wherein that the metal housing (1) comprising a housing main body (12) and a flange (13) formed at one end of the housing main body (12), and the sealing block being clamped between the flange (13) and the battery cell body (21).

10. The battery (100) according to any one of claims 1 to 9, wherein that the tab protrusion (231) having a length of 2.3 mm to 3.3 mm.

11. An electrical device comprising the battery (100) according to any one of claims 1 to 10.
